# EUROPÄISCHE PATENTSCHRIFT

(11) **EP 1 125 997 B1**
(45) Veröffentlichungstag und Bekanntmachung des Hinweises auf die Patenterteilung: **28.05.2008**
(21) Anmeldenummer: 00124884.8
(22) Anmeldetag: 15.11.2000
(51) Int. Cl.: C09D 175/04, C08G 18/62, C09D 5/02, B65D 83/14, C09K 3/30

(54) **Aerosolzubereitung für Zweikomponenten-Lacksprühdosen**
Aerosol composition for spray cans containing a two-component-lacquer
Composition d'aérosol pour distributeur sous pression contenant un vernis à deux composants

(30) Priorität: 08.02.2000 DE 10005332
(43) Veröffentlichungstag der Anmeldung: 22.08.2001
(73) Patentinhaber: Peter Kwasny GmbH, 74831 Gundelsheim (DE)
(72) Erfinder: Kwasny, Peter, 8200 Schaffhausen (Neuhausen) (CH)
(74) Vertreter: KEIL & SCHAAFHAUSEN Patentanwälte

(56) Entgegenhaltungen:
- EP-A- 0 030 840
- EP-A- 0 333 030
- US-A- 5 981 660

## Beschreibung

Die Erfindung betrifft eine Aerosolzubereitung für Zweikomponenten-Lacksprühdosen nach dem Oberbegriff der Ansprüche 1, 4 und 6, insbesondere für Zweikomponenten-Füller, spezielle Basislacke, Zweikomponenten-Einschicht-Decklacke und Zweikomponenten-Klarlacke, wobei das aus OH-gruppenhaltigen Acrylharzen bestehende Lackmaterial und der aus aliphatischen Polyisocyanaten bestehende Härter in zwei verschiedene Behälter innerhalb einer Sprühdose eingefüllt werden und erst unmittelbar vor der Verarbeitung zusammengeführt und mittels des aus einem Propan/Butan-Gemisch bestehenden Treibgases gemeinsam aus der Sprühdose verspritzt werden, und wobei das Verhältnis verdünntes Lackmaterial zu Treibgas gewichtsmäßig 75:25 bis 70:30 beträgt.

Als Aerosolzubereitungen für Autoreparaturlacke werden derzeit Einkomponenten-Lackmaterialien verwendet, die physikalisch oder oxidativ trocknend sind. Dies sind z.B. Kunstharz-Lacke (oxidativ trocknende Alkydharze), Nitrolacke (Nitro-Kombinationen mit Alkydharzen und Weichmachern), thermoplastische Acryl-Lacke (TPA-Lacke) (Acrylatlacke, physikalisch trocknende, thermoplastische Acrylharze) und Basiseffektlacke (Uni, Metallic, Pearl, CAB-Acrylat/Polyester-Kombinationen). Als Treibgas verwendete man hauptsächlich Fluorchlorkohlenwasserstoffe (FCKW), wodurch man eine breite Verträglichkeit und Löslichkeit mit den unterschiedlichen Lacksystemen erreichte.

Nach dem Verbot von FCKW wird als Treibgas in Lacksprühdosen verstärkt Dimethylether oder ein Propan/Butan-Gemisch verwendet (DE 38 08 405 C1). Diese Treibgase haben aber den Nachteil, dass z.B. Propan/Butan mit den unterschiedlichen Bindemittelsystemen der Lackmaterialien wie z.B.Nitrokombilacke nicht unbegrenzt verträglich sind, sondern nur noch zu einem bestimmten prozentualen Anteil. Ab einem bestimmten Anteil, z.B. 75 g verdünnter Lack (bis zu 70:30) und 25 g Propan/Butan fällt das Lackmaterial aus, da Propan/Butan als Nichtlöser wirkt.

Aus der EP 0 030 840 A1 ist ein Verfahren zur Herstellung eines zerstäubbaren Zweikomponenten-Polyurethanlacks bekannt, bei dem ein, in einem organischen Lösungsmittel gelöstes und Hydroxylgruppen enthaltendes Vorpolymerisat zusammen mit einem Treibmittel in ein erstes Druckgefäß und eine HärterKomponente auf Basis eines in einem organischen Lösungsmittel gelösten, 10 bis 25 Gew.% NCO-Gruppen enthaltenden Polyisocyanats mit einem Treibmittel in ein zweites Druckgefäß abgefüllt wird und zur Herstellung des gebrauchsfertigen Lackes eine der beiden Komponenten von seinem Druckgefäß in das andere Druckgefäß überführt und dort mit der anderen Komponenten gemischt wird. Als Vorpolymerisate für die Lackkomponente sind Copolymere mit einem Hydroxylgruppengehalt von 1 bis 7 Gew.-% basierend auf Styrol, Vinyltoluol, Methacrylsaureestern und/oder Acrylsäureestern mit einem C₁-C₈-Alkoholrest sowie Hydroxyalkylacrylate und/oder -methacrylate mit einem C₂-C₄-Alkoholrest oder Gemische aus solchen Copolymeren vorgesehen. Allerdings sind nur Vorpolymerisate mit einem Hydroxylgruppengehalt von 1 bis 2 Gew.-% mit Propan/Butan als Treibgas verträglich, wohingegen Präpolymere mit einem Hydroxylgruppengehalt von mehr als 2 Gew.-% lediglich mit Dimethylether oder einer Mischung aus Dimethylether und Propan/Butan verträglich sind.

Das Gleiche tritt bei thermoplastischen Acrylatlacken auf, bei denen die sehr wetterechten und spezifikationsgerechten Acrylatharze aufgrund ihres hohen Molekulargewichtes unverträglich mit Propan/Butan sind. Die niedrigmolekularen und weniger harten Typen zeigen dagegen eine schlechte Beständigkeit gegen Superkraftstoff und Weißanlaufen im Schwitzwassertest (Spezifikation der Automobilindustrie). Auch Effektbasislacke sind weitestgehend mit Propan/Butan unverträglich.

Nur Kunstharz-Lacke (oxidativ trocknende Alkydharzlacke) sind weitestgehend mit Propan/Butan-Gemisch verträglich. Das unter Druck stehende, in der Sprühdose flüssige Propan/Butan wirkt wie ein aliphatischer Kohlenwasserstoff (Benzin) und lufttrocknende Alkydharze sind aliphatenverträglich.

Für die Lackreparatur an Metallkarossen (Stahl, Aluminium, Zink) und an Kunststoffanbauteilen (PP, EPDM, PUR, PA, PC usw.) werden Reparatursysteme mit Lacksprühdosen benötigt, die aus Primern, Füllern, effektgebendem Basislack und Klarlack bestehen. Als Primer in Sprühdosen werden überwiegend Einkomponenten-Nitro-Primer oder Einkomponenten-Acryl-Primer verwendet, die jedoch verschiedene Korrosionsspezifikationen auf metallischen Untergründen oder der Haftung auf Kunststoffanbauteilen nicht erfüllen. Als Füller und Klarlack existieren als Sprühdosenmaterial bisher nur Einkomponenten-Füller und Einkomponenten-Klarlacke.

Mit diesen Qualitäten kann ein Profi-Lackierer nicht arbeiten, noch erfüllen diese Einkomponenten-Produkte die Spezifikationen der Automobilindustrie. Solche Produkte sind bei Füller auf Nitrokombi basiert (Nitro plus Alkydharze oder Nitro plus Acrylatharze), bei Klarlacken bestehen sie aus Einkomponenten-TPA-Acrylatharzen, physikalisch trocknend ohne chemische Vernetzung. In der täglichen Praxis der Autoreparaturwerkstätten verwendet man für die Reparaturlackierung von Kraftfahrzeugen Zweikomponenten-Füller und Zweikomponenten-Klarlacke auf Basis Zweikomponenten-Polyurethan (OH-Acrylatharze, chemisch aushärtend durch Polyisocyantate). Diese mit einer pneumatischen Spritzpistole verarbeitbaren Produkte erfüllen alle Anforderungen an Verarbeitung, Trocknung, Aushärtung, Glanz, Verlauf, mechanische und chemische Widerstandsfähigkeit, Lösemittelfestigkeit (Superkraftstoff) und Wetterbeständigkeit. Nur solche Zweikomponenten-produkte werden derzeit von der Automobilindustrie zur Reparaturlackierung von Fahrzeugen zugelassen und freigegeben. Und nur mit einem solchen Lackaufbau sind die gesetzlichen Anforderungen von Reparaturbetrieben zu erfüllen, ein beschädigtes Fahrzeug lacktechnisch wieder in den Ursprungszustand zu versetzen.

Um eine zur Hochdruck-Spritzpistole vergleichbare Applikation und Arbeitsgeschwindigkeit zu bekommen, hat es sich gezeigt, dass eine Lacksprühdose eine Aussprührate von 20 bis 22 g spritzfertigem Material in 10 Sekunden erreichen sollte. Diese Technologie ist Gegenstand der DE 196 36 221 C2 der Anmelderin und wird von dieser bei Einkomponenten-Lacksprühdosen für die Applikation von Autoreparaturlackmaterialien verwendet.

Bei der Weiterentwicklung dieser Lacksprühdosentechnologie auf Zweikomponenten-Lacksprays stellte sich heraus, dass alle handelsüblichen Zweikomponenten-Füller und -Klarlacke unverträglich mit Propan/Butan als Treibgas sind, und nur Dimethylether (DME) als Treibgas zu praxisgerechten Ergebnissen führt. Die bekannten Zweikomponenten-Materialien in Sprühdosen haben aber aufgrund des Treibgases DME gravierende Nachteile für den professionellen Anwender.

Wegen des niedrigeren Druckes von Dimethylether im Vergleich zu Propan/Butan kann man nicht mit dem üblichen gewichtsmäßigen Verhältnis von verdünntem Lackmaterial zu Treibgas von ca. 75:25 arbeiten. Um eine ausreichende Versprühung und eine feine Zerstäubung zu bekommen, braucht man gewichtsmäßig mindestens ein Verhältnis von 60:40 zwischen Lackmaterial und dem Treibgas Dimethylether. Das ergibt eine geringere Reichweite bzw. Ergiebigkeit in Quadratmeter lackierter Fläche, weil sich weniger Lackmaterial und dadurch mehr Gas in der Lacksprühdose befinden. Der höhere Anteil des Treibgases führt während der Versprühung zu einer deutlichen Senkung der Materialtemperatur durch die Verdunstungskälte, was wiederum einen Druckabfall und weniger Lackmaterialaustrag sowie ein ungleichmäßiges, tropfenweises Austreten des Lackmaterials aus der Sprühdose bewirkt. Auch der Verlauf ist schlechter und es bildet sich aufgrund des erhöhten Treibgasanteils ein hoher Anteil von trockenem Spritznebel, der den Verlauf und den Glanz beeinträchtigt. Schließlich erreicht man mit Dimethylether als Treibgas auch nicht den für die Aussprührate gewünschten Wert von 20 bis 22 g pro 10 Sekunden. Man bleibt mit 16 bis 17 g deutlich unter dem Soll.

Als Zweikomponenten-Sprühdosen-Lackmaterialien werden bisher ausschließlich OH-gruppenhaltige Polyester- oder Acrylatharze verwendet, weil die notwendige, chemische Aushärtung mit aliphatischen Polyisocyanaten erfolgen muss. Aliphatische Polyisocyanate als Härter sind im Gegensatz zu den Füllern und Klarlacken ausreichend Propan/Butan verträglich.

Alle im Handel für Füller und Klarlack (Zweikomponenten) erhältlichen OH-gruppenhaltigen Polyesterharze haben sich jedoch als unverträglich mit Propan/Butan erwiesen, weil OH-gruppenhaltige Polyesterharze nur eine beschränkte Aromatenverträglichkeit und eine absolute Aliphatenunverträglichkeit aufweisen. Dies ist darauf zurückzuführen, dass Propan/Butan unter Druck in einer Sprühdose wie ein aliphatisches Lösemittel wirkt. Auch alle OH-Acrylharze in handelsüblichen Zweikomponenten-Füllern und Zweikomponenten-Klarlacken erwiesen sich als nicht ausreichend verträglich mit Propan/Butan.

Die Verträglichkeit mit Propan/Butan wird aufgrund der unmittelbaren Ausfällung nach dem Einfüllen des Propan/Butan-Gemisches in dem Verhältnis 75:25 bis 70:30 gewichtsmäßig ermittelt. Danach prüft man die Lagerstabilität der Abfüllungen, die im Spontan-Verträglichkeitstest in Ordnung waren, in einem Alterungstest in einem Trockenschrank 3 Monate bei 50°C. Erst wenn beide Tests erfolgreich sind, kann man von markttauglichen Lacksprühdosen ausgehen.

Die meisten auf dem Markt erhältlichen Zweikomponenten-Füller und Zweikomponenten-Klarlacke waren sofort unverträglich mit Propan/Butan. Der Rest überstand nicht den nachfolgenden Alterungstest. Eine geringe Anzahl Proben zeigte eine beschränkte Verträglichkeit von 90:10, 85:15 bis maximal 80:20 gewichtsmäßig, was aber für eine Sprühdosen-Applikation nicht ausreichend ist.

Handelsübliche Zweikomponenten-Füller und Zweikomponenten-Klarlacke unterteilt man in sogenannte Low Solid (LS)-Produkte mit niedrigem Festkörperanteil und Medium Solid (MS)-Produkte und High Solid (HS)-Produkte mit höherem Festkörperanteil. Aufgrund der zukünftigen gesetzlichen VOC-Regulierungen in der europäischen Union (VOC=Volatile Organic Compound) werden zunehmend Lackmaterialien mit höherem Festkörperanteil und somit zu niedrigem Gehalt an verdunstenden organischen Lösemittel verwendet.

Zweikomponenten-MS-Klarlacke und Zweikomponenten-MS-Füller und die darin enthaltenen OH-gruppenhaltigen Acrylatharze haben in der Regel ein mittleres Molekulargewicht (Mw) von 9000 - 18000, Zweikomponenten-HS-Produkte ein Mw von < 5000 und Zweikomponenten-LS-Produkte > 15000 Mw.

Aufgabe der vorliegenden Erfindung ist es nun, eine Aerosolzubereitung für Zweikomponenten-Lacksprühdosen zu schaffen, bei denen die in der DE 196 36 221 C2 für Einkomponenten-Sprühdosen angegebenen Werte mit einem Treibgas aus einem Propan/Butan-Gemisch und einem Mischungsverhältnis Lackmaterial zu Treibgas gewichtsmäßig etwa 75:25 bis 70:30 erzielt werden.

Diese Aufgabe wird erfindungsgemäß mit den Merkmalen der kennzeichnenden Teile der unabhängigen Ansprüche 1, 4 und 6 gelöst.

Überraschenderweise enthält man bei MS-OH-Acrylatharzen bessere Propan/Butan-Verträglichkeiten in den geforderten Verhältnissen von 75:25 bis 70:30, wenn man ausschließlich OH-Acrylatharze mit einem niedrigen Styrolgehalt einsetzt. Dies alleine ist jedoch nicht ausreichend. Es besteht nämlich bei der Propan/Butan-Verträglichkeit eine starke Abhängigkeit von der OH-Zahl (bezogen auf Festharz). Es hat sich gezeigt, dass OH-gruppenhaltige Acrylatharze mit einer OH-Zahl < 80 unabhängig von ihrer MonomerenZusammensetzung eine sehr gute Propan/Butan-Verträglichkeit haben. Von 90 - 140 ist sie für viele Anwendungen noch ausreichend, während sie über 150 absolut unverträglich ist.

Eine Erhöhung oder Erniedrigung des Säurezahl ist in bezug auf die Propan/Butan-Verträglichkeit unkritisch. Gewöhnlich werden Harze mit einer Säurezahl zwischen 5 und 30 (mg KOH/g Festharz) ausgewählt. Für eine gute Propan/Butan-Verträglichkeit aller möglichen Harztypen ist es gemeinsam wichtig, eine Lösungsmitteleinstellung mit einem Gemisch von zwei Teilen Ester (z. B. Butylacetat) und einem Teil Aromaten (z.B. Xylol, Solvesso 100) vorzunehmen.

In der Regel werden OH-gruppenhaltige Acrylharze in Aromaten synthetisiert oder gekocht, jedoch sind 50 - 60 % Festkörperlösungen in reinen Aromaten grundsätzlich schlechter als 2:1 Ester/Aromaten-Gemische.

Zum Weiterverdünnen auf Spitzviskosität für die Sprühdosenabfüllung erfüllen Keton/Ester-Mischungen die geforderte Propan/Butan-Verträglichkeit von 75:25 bis 70:30. Eine vorteilhafte Einstellverdünnung besteht aus 50 - 55 % Aceton, 35 - 40 % Butylacetat und 10 - 15 % Methoxidpropylacetat (gewichtsmäßig).

Bei Einkomponenten-Sprühdosen werden üblicherweise Einstellverdünnungen mit 90 - 95 % Anteil Aceton gewichtsmäßig verwendet. Für Zweikomponenten-Füller und Zweikomponenten-Klarlacke sind diese gewöhnlichen Zusammensetzungen von Nachteil sowohl hinsichtlich der Propan/Butan-Verträglichkeit als auch in Bezug auf Verlauf, Verspritzbarkeit, Spritznebelaufnahme, Glanz, Aussprührate und Auswurf in Gramm. Die oben angeführte Verdünnung für Zweikomponenten-Produkte verbessert überraschenderweise alle oben aufgeführten Verträglichkeits-, Applikations- und Eigenschaftsparameter.

Auch Konzentration, Festkörper und Spritzviskosität bei handelsüblichen Zweikomponenten-Füller und Zweikomponenten-Klarlacken bekommen eine entscheidende Bedeutung für die Propan/Butan-Verträglichkeit. Gut ist eine Viskosität von 20-24" Auslaufviskosität in einem DIN-Becher mit 3 mm Düse, ideal ist eine Spritzviskosität von 21".

Völlig unerwartet und überraschend ergaben die Auswahlkriterien und Parameter für ausreichend Propan/Butan-verträgliche Zweikomponenten-Lackmaterialien, insbesondere für Zweikomponenten-Füller und Zweikomponenten-Klirlacke drei unterschiedliche Zusammensetzungen, die geforderten gewichtsmäßigen Mischungsverhältnisse von 75:25 bis 70:30 zu erfüllen:
1. HS-Klarlacke und HS-Füller basierend auf OH-gruppenhaltigen HS-Acrylharzen mit höherem Festkörpergehalt und einem mittleren Molekulargewicht von < 5000 Mw, vorzugsweise von 2500 bis 4500, bei gleichzeitigem Verzicht von Styrol im Monomerengemisch und einer OH-Zahl von < 150, vorzugsweise von 130 bis 140. Eine solche Aerosolzubereitung gewährleistet eine ausreichende Reaktivität, Wetterbeständigkeit, Chemikalienresistenz, Glanzerhaltung, Lösemittelbeständigkeit und gute chemische Vernetzung.
2. MS-Klarlacke und MS-Füller mit mittlerem Festkörper, eine eine gute chemische Vernetzung bewirkende styrolarme Monomerenzusammensetzung, eine OH-Zahl zwischen 130 und 140 und ein mittleres Molokulargewicht von < 15000, vorzugsweise von 9000 bis 13000 Mw.
3. LS-Klarlacke und LS-Füller mit niedrigem Festkörpergehalt und einem höheren Styrolgehalt und einem mittleren Molekulargewicht von > 15000 und einer OH-Zahl von < 80, vorzugsweise von 45 bis 60.

Dadurch wird eine zur Hochdruck-Spritzpistole vergleichbare Applikation und Arbeitsgeschwindigkeit von 20 bis 22 g Aussprührate von spritzfertigem Material in 10 Sekunden erreicht. Diese Technologie ist Gegenstand der DE 196 36 221 C2 der Anmelderin und wird von dieser bei Einkomponenten-lacksprühdosen für die Applikation von Autoreparaturlackmaterialien verwendet.

Damit wurden OH-gruppenhaltigen Acrylatharze gefunden, mit denen funktionierende Formulierungen von 2 Komponenten-Füllern und Zweikomponenten-Klarlacken in für die Applikation notwendigen Mischungsverhältnissen von 75:25 bis 70:30 gewichtsmäßig möglich wurden.

OH-gruppenhaltige Acrylharze mit OH-Zahlen von 45 bis 60 für Zweikomponenten-Füller und Zweikomponenten-Klarlacke wiesen aufgrund der niedrigen OH-Zahl gravierende lacktechnische Nachteile auf. Wegen der geringen OH-Zahl ist nur eine eingeschränkte chemische Vernetzung und Aushärtung mit aliphatischen Polyisocyanaten möglich. Sowohl die unzureichende Wetterbeständigkeit, Lösemittelbeständigkeit, Chemikalienbeständigkeit und Durchhärtung in höheren Schichtdicken als 45 bis 50 µm bei Zweikomponenten-Klarlacken schließen normalerweise eine Anwendung nach den Spezifikationen der Automobilindustrie aus, z.B. wegen mangelnder Beständigkeit gegen Superkraftstoff bei Fahrzeuglacken ausreichend. Bei Zweikomponenten-Füllern auf Basis dieser Harze sind Kohäsionsbrüche ab einer Schichtdicke von 80 µm aufgetreten. Diese Produkte härten aufgrund der niedrigen OH-Zahlen nur zu Zweikomponenten-PUR-Qualitäten der zweiten oder dritten Qualitätsstufe aus. Es überwiegt noch sehr stark die physikalische Trocknung wie bei den Einkomponenten-Sprühdosenlacken. Gewöhnlich setzt man solche 2 Komponenten-Füller und Zweikomponenten-Klarlacke der beschriebenen Provenienz nicht als Profi-Autoreparaturlackqualität, sondern nur für Industrieanwendung ein.

Erfindungsgemäß konnten die chemischen und lacktechnischen Nachteile dadurch eliminiert werden, dass man die OH-gruppenhaltigen Acrylatharze nicht gemäß ihrer OH-Zahl stöchiometrisch mit aliphatischen Polyisocyanaten als Härter vernetzte, sondern eine 100 bis 300 %-ige Übervernetzung vornahm. Lediglich die Luft- und Ofentrocknung verzögerten sich dadurch in vertretbarem Rahmen während Lösemittelbeständigkeit, Chemikalienbeständigkeit und Wetterbeständigkeit deutlich verbessert wurden, so daß ein Einsatz als Autoreparaturlack möglich wurde.

## Patentansprüche

1. Aerosolzubereitung für Zweikomponenten-Lacksprühdosen, wobei das aus OH-gruppenhaltigen Acrylharzen bestehende Lackmaterial und der aus aliphatischen Polyisocyanaten bestehende Härter in zwei verschiedenen Behältern innerhalb einer Sprühdose eingefüllt werden und erst unmittelbar vor der Verarbeitung zusammengeführt und mittels des aus einem Propan/ Butan-Gemisch bestehenden Treibgases gemeinsam aus der Sprühdose verspritzt werden, und wobei das Verhältnis verdünntes Lackmaterial zu Treibgas gewichtsmäßig 75:25 bis 70:30 beträgt, **dadurch gekennzeichnet, dass** das Lackmaterial aus OH-gruppenhaltigen HS (High Solid)-Acrylharzen mit einem mittleren Molekulargewicht von < 5000 besteht, dass das Monomerengemisch der HS-Acrylharze kein Styrol aufweist und eine OH-Zahl von < 150 hat.

2. Aerosolzubereitung nach Anspruch 1, **dadurch gekennzeichnet, dass** das Lackmaterial ein mittleres Molekulargewicht von 2500 bis 4500 hat.

3. Aerosolzubereitung nach Anspruch 1 oder 2, **dadurch gekennzeichnet, dass** die OH-Zahl zwischen 130 und 140 liegt.

4. Aerosolzubereitung für Zweikomponenten-Lacksprühdosen, wobei das aus OH-gruppenhaltigen Acrylharzen bestehende Lackmaterial und der aus aliphatischen Polyisocyanaten bestehende Härter in zwei verschiedenen Behältern innerhalb einer Sprühdose eingefüllt werden und erst unmittelbar vor der Verarbeitung zusammengeführt und mittels des aus einem Propan/ Butan-Gemisch bestehenden Treibgases gemeinsam aus der Sprühdose verspritzt werden, und wobei das Verhältnis verdünntes Lackmaterial zu Treibgas gewichtsmäßig 75:25 bis 70:30 beträgt, **dadurch gekennzeichnet, dass** das Lackmaterial aus OH-gruppenhaltigen MS (Medium Solid)-Acrylharzen mit einem mittleren Molekulargewicht von < 15000 besteht und dass das Monomerengemisch der MS-Acrylharze einen geringeren Anteil Styrol aufweist und eine OH-Zahl zwischen 130 und 140 hat.

5. Aerosolzubereitung nach Anspruch 4, **dadurch gekennzeichnet, dass** das Lackmaterial ein mittleres Molekulargewicht von 9000 bis 13000 hat.

6. Aerosolzubereitung für Zweikomponenten-Lacksprühdosen, wobei das aus OH-gruppenhaltigen Acrylharzen bestehende Lackmaterial und der aus aliphatischen Polyisocyanaten bestehende Härter in zwei verschiedenen Behältern innerhalb einer Sprühdose eingefüllt werden und erst unmittelbar vor der Verarbeitung zusammengeführt und mittels des aus einem Propan/ Butan-Gemisch bestehenden Treibgases gemeinsam aus der Sprühdose verspritzt werden, und wobei das Verhältnis verdünntes Lackmaterial zu Treibgas gewichtsmäßig 75:25 bis 70:30 beträgt, **dadurch gekennzeichnet, dass** das Lackmaterial aus OH-gruppenhaltigen LS (Low Solid)-Acrylharzen mit einem mittleren Molekulargewicht von > 15000 besteht und dass das Monomergemisch der LS-Acrylharze einen höheren Anteil Styrol aufweist und eine OH-Zahl von < 80 hat.

7. Aerosolzubereitung nach Anspruch 6, **dadurch gekennzeichnet, dass** die OH-Zahl zwischen 45 und 60 liegt.

## Claims

1. Aerosol preparation for two-component paint spray cans, the paint material, which consists of OH-group-containing acrylic resins, and the hardener, which consists of aliphatic polyisocyanates, being introduced into two different containers inside a spray can and being united only immediately before processing and being sprayed out of the spray can jointly by means of the propellant gas which consists of a propane/butane mixture, and the ratio by weight of dilute paint material to propellant gas being from 75:25 to 70:30, **characterised in that** the paint material contains OH-group-containing HS (high solid) acrylic resins having a mean molecular weight of < 5000, and the monomer mixture of the HS acrylic resins does not contain styrene and has an OH number of < 150.

2. Aerosol preparation according to claim 1, **characterised in that** the paint material has a mean molecular weight of from 2500 to 4500.

3. Aerosol preparation according to claim 1 or 2, **characterised in that** the OH number is from 130 to 140.

4. Aerosol preparation for two-component paint spray cans, the paint material, which consists of OH-group-containing acrylic resins, and the hardener, which consists of aliphatic polyisocyanates, being introduced into two different containers inside a spray can and being united only immediately before processing and being sprayed out of the spray can jointly by means of the propellant gas which consists of a propane/butane mixture, and the ratio by weight of dilute paint material to propellant gas being from 75:25 to 70:30, **characterised in that** the paint material contains OH-group-containing MS (medium solid) acrylic resins having a mean molecular weight of < 15000, and the monomer mixture of the MS acrylic resins contains a relatively small proportion of styrene and has an OH number of from 130 to 140.

5. Aerosol preparation according to claim 4, **characterised in that** the paint material has a mean molecular weight of from 9000 to 13000.

6. Aerosol preparation for two-component paint spray cans, the paint material, which consists of OH-group-containing acrylic resins, and the hardener, which consists of aliphatic polyisocyanates, being introduced into two different containers inside a spray can and being united only immediately before processing and being sprayed out of the spray can jointly by means of the propellant gas which consists of a propane/butane mixture, and the ratio by weight of dilute paint material to propellant gas being from 75:25 to 70:30, **characterised in that** the paint material contains OH-group-containing LS (low solid) acrylic resins having a mean molecular weight of > 15000, and the monomer mixture of the LS acrylic resins contains a relatively high proportion of styrene and has an OH number of < 80.

7. Aerosol preparation according to claim 6, **characterised in that** the OH number is from 45 to 60.

## Revendications

1. Préparation pour aérosol destinée à des bombes à aérosol de peinture à deux composants, le matériau de peinture composé de résines acryliques comprenant des groupes OH et le durcissant composé de polyisocyanates aliphatiques étant remplis à l'intérieur d'une bombe à aérosol dans deux récipients distincts et étant mis en contact qu'immédiatement avant le traitement et étant pulvérisés ensemble hors de la bombe à aérosol au moyen du gaz propulseur composé d'un mélange propane/butane, et le rapport en poids entre le matériau de peinture dilué et le gaz propulseur étant compris entre 75 : 25 et 70 : 30, **caractérisée en ce que** le matériau de peinture se compose de résines acryliques HS (high solid) comprenant des groupes OH ayant un poids moléculaire moyen inférieur à 5 000, **en ce que** le mélange de monomères de la résine acrylique HS ne contient pas de styrène et a un indice d'hydroxyle inférieur à 150.

2. Préparation pour aérosol selon la revendication 1, **caractérisée en ce que** le matériau de peinture a un poids moléculaire moyen compris entre 2 500 et 4 500.

3. Préparation pour aérosol selon la revendication 1 ou 2, **caractérisée en ce que** l'indice d'hydroxyle est compris entre 130 et 140.

4. Préparation pour aérosol destinée à des bombes à aérosol de peinture à deux composants, le matériau de peinture composé de résines acryliques comprenant des groupes OH et le durcissant composé de polyisocyanates aliphatiques étant remplis à l'intérieur d'une bombe à aérosol dans deux récipients distincts et étant mis en contact qu'immédiatement avant le traitement et étant pulvérisés hors de la bombe à aérosol ensemble au moyen du gaz propulseur composé d'un mélange propane/butane, et le rapport en poids entre le matériau de peinture dilué et le gaz propulseur étant compris entre 75 : 25 et 70 : 30, **caractérisée en ce que** le matériau de peinture se compose de résines acryliques MS (Medium solid) comprenant des groupes OH ayant un poids moléculaire moyen inférieur à 15 000, **en ce que** le mélange de monomères de la résine acrylique MS présente une faible teneur en styrène et a un indice d'hydroxyle compris entre 130 et 140.

5. Préparation pour aérosol selon la revendication 4, **caractérisée en ce que** le matériau de peinture a un poids moléculaire moyen compris entre 9 000 et 13 000.

6. Préparation pour aérosol destinée à des bombes à aérosol de peinture à deux composants, le matériau de peinture composé de résines acryliques comprenant des groupes OH et le durcissant composé de polyisocyanates aliphatiques étant remplis à l'intérieur d'une bombe à aérosol dans deux récipients distincts et étant mis en contact qu'immédiatement avant le traitement et étant pulvérisés hors de la bombe à aérosol ensemble au moyen du gaz propulseur composé d'un mélange propane/butane, et le rapport en poids_entre le matériau de peinture dilué et le gaz propulseur étant compris entre 75 : 25 et 70 : 30, **caractérisée en ce que** le matériau de peinture se compose de résines acryliques LS (Low solid) comprenant des groupes OH ayant un poids moléculaire moyen supérieur à 15 000, **en ce que** le mélange de monomères de la résine acrylique LS présente une teneur en styrène plus importante et a un indice d'hydroxyle inférieur à 80.

7. Préparation pour aérosol selon la revendication 6, **caractérisée en ce que** l'indice d'hydroxyle est compris entre 45 et 60.
